# FASCICULE DE BREVET EUROPEEN

(11) **EP 0 876 623 B1**
(45) Date de publication et mention de la délivrance du brevet: **27.02.2002**
(21) Numéro de dépôt: 96942416.7
(22) Date de dépôt: 17.12.1996
(51) Int. Cl.: G01S 13/74

(54) **PROCEDE DE DETERMINATION DE LA DIRECTION D'UN EMETTEUR-RECEPTEUR DE RADIOCOMMUNICATION ET EMETTEUR-RECEPTEUR METTANT EN OEUVRE CE PROCEDE**
VERFAHREN ZUR BESTIMMUNG DER RICHTUNG EINER TELEKOMMUNIKATIONS-SENDE-/EMPFANGSVORRICHTUNG UND SENDE-/EMPFANGSVORRICHTUNG DAFÜR
METHOD FOR DETERMINING THE DIRECTION OF A RADIOCOMMUNICATION EMITTER-RECEIVER, AND EMITTER-RECEIVER IMPLEMENTING SAID METHOD

(30) Priorité: 26.01.1996 FR 9600937
(43) Date de publication de la demande: 11.11.1998
(73) Titulaire: Thales, 75008 Paris (FR)
(72) Inventeur: HETHUIN, Serge, F-94117 Arcueil Cédex (FR); RAMEL, Louis, F-94117 Arcueil Cédex (FR)
(74) Mandataire: Dudouit, Isabelle
(86) Numéro de dépôt international: FR9602012
(87) Numéro de publication internationale: WO9727498

(56) Documents cités:
- FR-A- 2 461 963
- GB-A- 1 605 283
- GB-A- 2 243 739
- US-A- 5 068 654

## Description

La présente invention se rapporte à la localisation d'un poste émetteur-récepteur pour radiocommunication, surtout lorsqu'il est mobile, et plus précisément à la détermination de la direction dans laquelle se trouve un poste par rapport à un autre poste ; elle a, en particulier, pour cadre les réseaux de radiocommunication où la transmission de données se fait par paquets comportant un en-tête à une première fréquence porteuse suivi d'un champ d'informations à une seconde fréquence porteuse qui varie selon une rampe linéaire. Et c'est dans ce cadre qu'un exemple de mise en oeuvre de l'invention sera donné.

La connaissance, par tous les postes émetteurs-récepteurs du réseau, de la direction dans laquelle se trouvent les autres postes du réseau permet d'optimiser le fonctionnement du réseau, en particulier en utilisant une antenne directive pour l'émission de paquets de données vers un autre poste du réseau. Cette connaissance des directions peut, bien entendu, être également exploitée à d'autres fins que le fonctionnement du réseau, par exemple à la localisation d'un poste sous réserve de connaître la distance à laquelle il se trouve.

Pour connaître la direction dans laquelle se trouve un autre poste il est possible d'adjoindre à chaque poste émetteur-récepteur une installation radar mais il s'agit là d'une solution bien trop onéreuse pour pouvoir être retenue à moins que l'installation radar ne soit pas prévue uniquement pour une mesure de la direction dans laquelle se trouvent, par rapport au poste considéré, les autres postes du réseau. De plus, pour des antennes de prix comparables, la puissance d'émission nécessaire à une installation radar pour obtenir en retour, d'une distance donnée, un signal de niveau donné, est bien supérieure à la puissance d'émission nécessaire à un poste émetteur pour qu'un poste récepteur, situé à cette même distance donnée, reçoive un signal ayant cette même puissance donnée.

La mesure de direction peut également être faite dans un réseau si tous les postes sont capables de fournir à tout moment les coordonnées de leur position mais, pour cela, il faut que chaque poste soit capable de fournir ses coordonnées, ce qui nécessite de lui adjoindre un matériel de relevé de position.

L'invention a pour but d'éviter ou, pour le moins, de réduire ces inconvénients.

Ceci est obtenu par une mesure de direction effectuée de façon coopérative : un poste interrogateur envoie un signal d'interrogation; les signaux de réponse comportent la désignation des postes qui les émettent ; le poste interrogateur reçoit sur un ensemble d'antennes directives pointées selon différents azimuts et peut donc déduire la direction dans laquelle se trouve le poste correspondant à un signal de réponse qu'il reçoit.

Selon l'invention il est proposé, pour effectuer cette mesure de direction, un procédé tel que décrit dans la revendication 1.

Il est à noter qu'il est connu par le brevet US 5 068 654 de procéder à la détermination de la direction dans laquelle, pour un poste émetteur-récepteur A, d'un réseau se trouve un poste émetteur-récepteur B, du réseau en utilisant un poste émetteur C qui envoie un signal de synchronisation ; ce signal déclenche, dans les postes émetteurs-récepteurs du réseau, des signaux de réponse dans des intervalles de temps qui sont respectivement attribués aux postes du réseau et l'émission se fait sur antenne omnidirectionnelle ; le poste A peut rechercher, grâce à une antenne multi-segments et multidirectionnelle et en fonction du signal de réponse du poste B, quelle est la direction du poste B. Mais un tel procédé ne laisse pas au poste A l'initiative du déclenchement de la recherche et nécessite la présence d'un poste de synchronisation, C, si bien que lorsque le poste C est en panne toute recherche de direction entre deux postes A et B du réseau quels que soient ces deux postes dans le réseau, est impossible.

La présente invention sera mieux comprise et d'autres caractéristiques apparaîtront à l'aide de la description ci-après et des figures s'y rapportant qui représentent:
- la figure 1a, un diagramme des temps relatif à un signal d'interrogation utilisé dans une mise en oeuvre du procédé selon l'invention,
- la figure 1b, une diagramme des temps relatif à des signaux de réponse élaborés suite à la réception d'un paquet d'interrogation comme celui qui est illustré par la figure 1a,
- la figure 2, une représentation schématique d'un ensemble d'antennes utilisé dans un poste émetteur-récepteur pour la mise en oeuvre du procédé selon l'invention,
- les figures 3 et 4, les schémas d'un poste émetteur-récepteur utilisé pour une mise en oeuvre du procédé selon l'invention, ces schémas étant limités dans le cas de la figure 3 aux circuits qui servent à émettre un signal d'interrogation et à traiter le signal de réponse correspondant, et dans le cas de la figure 4 aux circuits qui servent à émettre un signal de réponse.

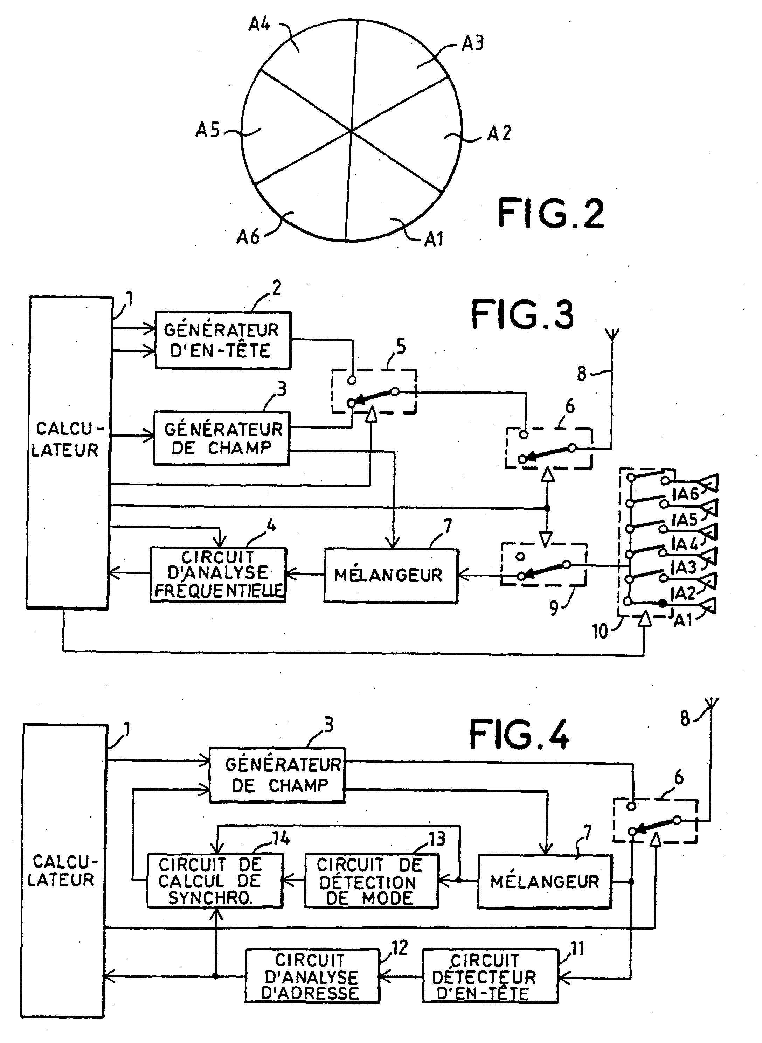

Sur les figures les éléments correspondants sont désignés par les mêmes repères et il est à noter que dans l'exemple de réalisation qui va être décrit, les postes interrogateurs et répondeurs sont identiques mais leurs schémas diffèrent selon que ces schémas sont limités aux circuits qui servent à l'émission d'un signal d'interrogation et au traitement d'un signal reçu en réponse de l'interrogation, comme en figure 3, ou qu'ils sont limités aux circuits qui servent à l'émission d'un signal de réponse, comme en figure 4.

Le procédé selon l'invention va être décrit dans le cadre d'un réseau de transmission par paquets entre plusieurs postes émetteurs-récepteurs mobiles travaillant à des fréquences d'émission autour de 5,2 GHz et pouvant être à des distances les uns des autres n'excédant pas 500 mètres. .

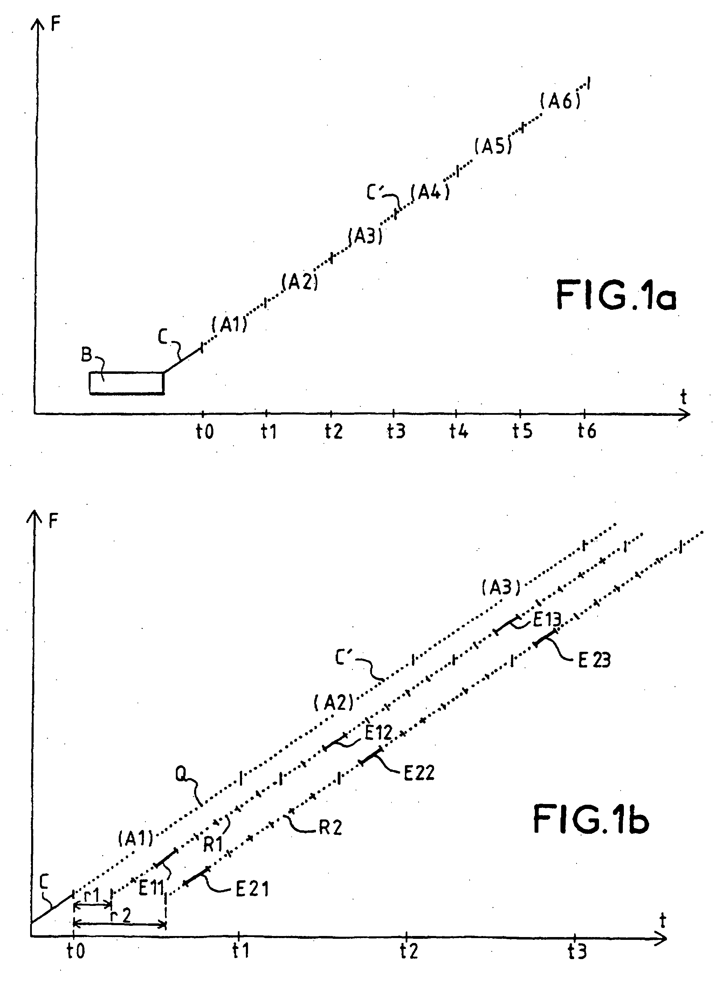

La figure 1a est un diagramme fréquence/temps montrant comment un poste émetteur-récepteur, Q, du réseau, déclenche le procédé qui va lui permettre d'évaluer les directions dans lesquelles se trouvent d'autres postes du réseau.

Le poste interrogateur Q va, pour évaluer ces directions émettre, sur une antenne omnidirectionnelle, un signal d'interrogation destiné aux postes interrogés. Ce signal est constitué par un paquet qui comporte un en-tête B, suivi d'un champ d'informations C.

L'en-tête B, d'une durée de 100 µs, est transmis sur une fréquence porteuse fixe F1 et occupe un canal de transmission. Un rectangle symbolise, sur la figure 1a, les limites en temps et en fréquences entre lesquelles est émis l'en-tête considéré. Cet en-tête comporte la désignation des postes interrogés ainsi qu'une information qui indique que le paquet est un paquet d'interrogation, Il va être supposé, pour la partie de la description qui se rapporte à la figure 1b, que le poste Q désire connaître la direction de deux postes R1 et R2 et désigne, pour cela, dans le paquet d'interrogation, les postes R1, R2 par leur adresse.

Le champ d'informations C, d'une durée de 50 µs, est transmis sous la forme d'une fréquence Fv non modulée qui varie linéairement selon une rampe ; il s'agit donc ici d'un champ d'informations qui est, en fait, vide d'informations sauf, dans certains cas, en début de rampe. Quand au temps t0 le champ est émis, le poste Q continue à produire, à usage interne, un signal C' dont la fréquence Fv varie selon la même rampe linéaire que le champ C, jusqu'au temps t6, avec t6 - t0 = 6 x 80 µs = 480 µs; sur la figure 1a ce signal C' est dessiné en pointillés. Pendant les 480 µs le poste Q se met en réception en utilisant pour cela successivement les six antennes sectorielles A1 à A6 d'un ensemble d'antennes représenté schématiquement sur la figure 2. Ces antennes sont pointées selon six azimuts différents avec un écart régulier de 60 degrés entre les azimuts et une couverture azimutale d'un peu plus de 60 degrés par antenne.

Les postes du réseau comportent tous une antenne omnidirectionnelle qui est utilisée en émission, celle là même qui a servi au poste interrogateur Q pour émettre son paquet d'interrogation. Dans l'exemple décrit c'est cette antenne omnidirectionnelle qui est également utilisée en veille normale ou en réception normale, l'adjectif normale s'appliquant ici à tout moment de veille ou de réception sauf, pour le poste interrogateur Q, pendant la période de 480 µs qui suit l'envoi du paquet d'interrogation et pendant laquelle il est soit en attente de réponse à ce paquet d'interrogation soit en réception d'une réponse. Pendant ces 480 µs le poste Q utilise successivement les antennes A1 à A6 et cela pendant des intervalles de temps successifs de 80 µs, ce qui explique le calcul de 6 x 80 µs effectué plus avant.

Quand les autres postes du réseau reçoivent le paquet d'interrogation élaboré par le poste Q ils trouvent dans l'en-tête de ce paquet l'information leur indiquant qu'il s'agit d'un paquet d'interrogation. Si, en plus, ils trouvent leur propre désignation dans l'en-tête ils élaborent un signal de réponse constitué par une rampe de fréquence modulée par une information qui représente la désignation du poste répondeur ; cette rampe de fréquence est élaborée avec la même pente que la rampe du champ d'informations C du paquet d'interrogation et en synchronisme de fréquence avec la rampe du champ C tel qu'il est reçu, c'est-à-dire avec un certain retard par rapport au champ C au moment où il a été élaboré par le poste Q.

Compte tenu de ce que, dans l'exemple décrit, un poste peut envoyer un même signal d'interrogation en désignant plusieurs autres postes du réseau, il y a risque de collision entre les réponses lors de leur réception par le poste interrogateur; pour réduire ces risques les postes interrogés, R1 et R2 dans le cas du paquet considéré, émettent leur signal pendant seulement 5 µs dans chacun des six intervalles de temps successifs de 80 µs qui suivent la réception du paquet d'interrogation ; dans chacun des postes interrogés l'instant d'émission du premier des six signaux est choisi au hasard parmi les 16 sous-intervalles de temps des 80 premières microsecondes qui suivent l'arrivée du paquet d'interrogation, et les cinq autres signaux sont émis régulièrement derrière le premier, avec une période de 80µs.

Le poste interrogateur Q qui est passé, comme il a été indiqué, en réception dès qu'il a terminé d'émettre le signal d'interrogation, va ainsi pouvoir recevoir, sur celle de ses six antennes qui est dirigée vers le poste R1, le signal de réponse émis par R1 et, sur celle qui est dirigée vers le poste R2, le signal de réponse émis par R2. La connaissance de celle des six antennes sectorielles qui a capté un signal de réponse donné et la connaissance de l'information contenue dans ce signal et qui donne la désignation du poste dont provient le signal, fournissent au poste Q la direction dans laquelle se trouve le poste dont il a reçu la réponse, avec une précision de + 30 degrés ; il est entendu que si un même signal de réponse est capté sur deux antennes sectorielles adjacentes c'est la combinaison des directions de pointage de ces deux antennes, pondérée par les niveaux d'énergie du signal reçu par chacune des deux antennes, qui sera prise comme direction du poste ayant émis ce signal de réponse.

Avec, par exemple, six antennes sectorielles présentant chacune une couverture azimutale de 60 degrés à 3 dB, c'est-à-dire avec des zones de couverture azimutale se chevauchant nettement, en tenant compte d'une part des niveaux de l'énergie reçue sur deux antennes adjacentes pour un même signal de réponse et d'autre part des gabarits des antennes, il est possible de déterminer avec plus de précision, si nécessaire, la direction dans laquelle se trouve le poste qui a émis le signal de réponse considéré; mais, comme une précision meilleure que ± 30 degrés n'était pas nécessaire dans l'application pour laquelle a été réalisé le matériel qui sert d'exemple à la description, ce matériel, pour ne pas augmenter son coût, a été réalisé comme décrit dans les paragraphes précédents.

La figure 1b est un diagramme fréquence/temps qui illustre l'échange question-réponse tel qu'il a été décrit plus avant entre trois postes d'un même réseau : un poste Q interrogateur et deux postes R1 et R2 interrogés. A ce sujet il est à noter que dans le réseau considéré, comme tous les postes sont identiques, un même poste peut tantôt être interrogateur et tantôt être interrogé.

Sur la figure 1b les proportions n'ont pas été respectées par souci de clarté du dessin. Cette figure reprend, avec une échelle des temps et des fréquences dilatée, le graphique de la figure 1a peu avant le temps t0 où le poste Q a fini d'émettre son paquet d'interrogation, jusqu'à peu après le temps t3 où le poste Q passe d'une écoute avec l'antenne A2 à une écoute avec l'antenne A4. En plus de ce graphique la figure 1b donne une représentation des signaux de réponse des postes R1 et R2 tels qu'ils arrivent au niveau du poste Q. Là encore les rampes de fréquence ont été dessinées en pointillés hormis là où les postes R1 et R2 ont effectivement émis un signal et ces signaux qui sont notés E11, E12, E13 pour le poste R1 et E21, E22, E23 pour le poste R2, sont dessinés en traits forts ; ces signaux qui, ainsi qu'il a été indiqué plus avant, sont d'une durée de 5 µs et sont répétés toutes les 80 µs, ont été représentés comme s'ils avaient une durée de 10 µs afin de mieux les distinguer sur le dessin.

Il est à noter sur la figure 1a que, par rapport à la rampe C du paquet d'interrogation au moment où elle a été émise par le poste Q, les rampes relatives aux signaux de réponse provenant de R1 et de R2 présentent respectivement des retards r1 et r2. Ces retards qui sont dus principalement aux temps de trajet aller et retour entre le poste interrogateur et les postes interrogé, ont été considérablement allongés sur la figure 1b afin de pouvoir distinguer les trois rampes; en réalité avec des postes distants les uns des autres d'au plus 500 mètres, les retards n'atteignent même pas 4 µs alors que les intervalles de temps tels que t0-t1 sont de 80µs. Le cas représenté est celui où le poste R1 est plus de deux fois plus loin du poste Q que le poste R1.

Il va être considéré dans ce qui suit que les postes R1 et R2 sont dans des positions azimutales surveillées respectivement par les antennes A3 et A1 du poste Q.

Les signaux E11 et E12, lorsqu'ils arrivent au poste Q, ne peuvent être captés puisque le poste Q est alors en écoute respectivement avec les antennes A1 et A2 ; par contre lorsque le signal E13 arrive au poste Q qui est alors en écoute avec l'antenne A3, il est pris en compte et le poste Q en déduit que le poste R1, dont la désignation est contenue dans le signal E13, est dans une direction correspondant à la couverture azimutale de l'antenne A3.

Pour ce qui est du poste R2 qui se trouve dans la couverture azimutale de l'antenne A1, dès que son premier signal de réponse, E21, arrive au poste Q il est reçu sur l'antenne A1 et pris en compte par le poste Q pour en déduire la direction du poste R2.

Il a été supposé jusqu'ici que le poste Q désirait connaître la direction de deux postes R1 et R2 et qu'il les désignait, dans le paquet d'interrogation, par leur adresse. Mais d'autres modes de fonctionnement sont également possibles : - le poste interrogateur peut ne désigner qu'un poste par paquet d'interrogation, ce qui a l'avantage d'éviter les risques de collision entre les réponses puisqu'il n'y a plus qu'une seule réponse - le pose interrogateur peut, grâce à des listes prédéfinies de postes du réseau, connues de tous les postes concernés, désigner les postes qu'il désire interroger non pas par leur adresse mais par une référence correspondant à l'une des listes ; là encore, comme dans l'exemple qui a été décrit à l'aide de la figure 1b, chaque poste interrogé peut, pour répondre, choisir au hasard un des 16 sous-intervalles des six intervalles de temps de 80 µs ou, d'une façon plus générale, un des m sous-intervalles des n intervalles de temps de tµs, avec m entier supérieur à 0, n entier supérieur à 1 et t valeur donnée, étant entendu que pour m=1 le sous-intervalle est imposé puisqu'il est unique, et que n est égal au nombre d'antennes de l'ensemble d'antennes sectorielles du poste interrogateur.

Pour la réponse à un paquet d'interrogation d'autres modes de fonctionnement existent en dehors de celui qui consiste, pour le poste interrogé à répondre pendant un sous-intervalle choisi au hasard. Ainsi, dans le cas où un seul poste est interrogé mais aussi dans les cas où le poste interrogateur sait que les postes interrogés sont tous dans des zones couvertes par des antennes différentes de son ensemble d'antennes sectorielles, le poste interrogateur indique dans son paquet d'interrogation que le ou les postes interrogés doivent utiliser pour lui répondre la totalité de la rampe de fréquence qui leur est allouée.

Le procédé, tel qu'il a été décrit à l'aide en particulier de la figure 1b, peut être modifié pour l'identification de plusieurs postes interrogés à un même instant et qui risquent de se trouver dans la zone couverte par une seule et même antenne de l'ensemble d'antennes sectorielles ; dans ce cas, au lieu de n'effectuer qu'un seul cycle de scrutation sectorielle au sein de la rampe de fréquence de 480 µs, avec une seule exploration de chacun des six secteurs pendant 80 µs, il est possible, par exemple, d'effectuer deux cycles de scrutation pendant les 480 µs et chaque secteur est exploré pendant 80 µs mais durant deux intervalles distincts de 40 µs et, lors de sa réponse, le poste interrogé choisit au hasard, pour chacun des deux cycles, un sous-intervalle de 5µs parmi 8 intervalles de 40µs ; en pratique, à moins de conditions spéciales d'utilisation, le nombre de cycles de scrutation ne dépassera pas trois. Par ailleurs le nombre de cycles pourra ne pas être un nombre entier, c'est ainsi par exemple qu'il pourra être d'un cycle plus un intervalle ; ceci peut être intéressant lorsque les distances entre postes sont telles qu'elles occasionnent des retards qui font qu'un signal de réponse qui serait destiné à l'antenne A1 de l'exemple décrit, n'arriverait sur l'ensemble des antennes A1 à AS qu'après que l'antenne A1 ait été remplacée par l'antenne A2 dans le premier cycle de scrutation, il suffit alors de commuter à nouveau une fois l'antenne A1.

Il est à noter qu'il est également possible, pour les postes interrogés, de n'émettre que pendant l'un des cycles en choisissant ce cycle au hasard ou de façon prédéterminée.

Une autre façon d'éviter les collisions entre les réponses est d'attribuer un sous-intervalle à chaque poste interrogé; cette attribution peut se faire par exemple grâce au poste interrogateur qui envoie un paquet préparatoire dans lequel il indique à chacun des postes interrogés quel sous-intervalle il devra employer pour sa réponse au paquet d'interrogation qui va suivre; cette attribution peut également se faire de façon prédéterminée par la position qu'occupe chaque poste interrogé dans une liste de postes transmise sous forme d'adresses ou de référence à une liste prédéfinie, ainsi, par exemple, le troisième poste de la liste prendra le troisième intervalle.

Les postes, dans l'exemple décrit, peuvent être alternativement interrogateurs et interrogés et, si certains circuits sont désignés par les mêmes références dans les schémas partiels des figures 3 et 4, c'est qu'il s'agit de circuits utilisés aussi bien lorsque le poste interroge que lorsqu'il répond à un signal d'interrogation.

Le schéma selon la figure 3 représente un calculateur 1 qui commande un générateur d'en-tête 2, un générateur de champ d'informations 3, un circuit d'analyse fréquentielle 4 et quatre commutateurs 5, 6, 9, 10 et reçoit les signaux de sortie du circuit 4.

Le générateur d'en-tête a sa sortie reliée à la première borne du commutateur 5 dont le point milieu est relié à la première borne du commutateur 6 et dont la première borne est reliée à une sortie de signal de rampe modulée du générateur de champ 3 ; le point milieu du commutateur 6 est relié à une antenne d'émission-réception 8. Un mélangeur 7 a une première entrée reliée à la seconde borne d'un commutateur 9 et une seconde entrée reliée à une sortie de signal de rampe pure du générateur de champ 3. La sortie du mélangeur 7 est reliée, à travers le circuit d'analyse fréquentielle 4, au calculateur 1.

Le point milieu du commutateur 9 est relié au point milieu du commutateur 10. Ce commutateur 10 comporte six contacts commandés séparément par le calculateur 1 ; à ces contacts sont associées six sorties sur lesquelles sont branchées respectivement les six antennes sectorielles A1 à A6 dont il a été question dans ce qui précède et qui ont été représentées, sur la figure 2, dans les positions qu'elles occupent les unes par rapport aux autres.

Pour l'émission du paquet B, C selon les figures 1a, 1b, le calculateur fournit au générateur d'en-tête 2 une information dite de mode mesure, l'adresse des postes destinataires R1, R2 et un signal de départ d'en-tête. Le calculateur fournit au générateur de champ 3 un signal de départ de champ. De plus le calculateur 1 commande le passage en position haute du commutateur 5 pour le temps nécessaire à l'émission de l'en-tête B, le passage en position basse du commutateur 5, pour le temps nécessaire à l'émission du champ C, le passage du commutateur 6 en position haute pour le temps nécessaire à l'émission du paquet B, C et le passage du commutateur 9 en position basse dès que l'émission du paquet B, C est terminée.

Quand un signal de réponse est reçu, par l'une des antennes A1 à A6 du poste interrogateur, comme il a été vu précédemment, le mélangeur 7 selon la figure 3 effectue le mélange de ce signal avec le signal C' produit, à usage interne, et délivre un signal de battement f ; ce signal de battement est analysé dans le circuit d'analyse fréquentielle 4 qui est commandé en synchronisation avec le commutateur 10; le signal délivré par le circuit 4 au calculateur 1 permet à ce dernier de déterminer la direction du poste dont provient le signal de réponse.

Le schéma selon la figure 4 représente les circuits du poste qui sont employés pour recevoir un paquet d'interrogation B, C et envoyer un signal de réponse à ce paquet.

Le schéma représente le calculateur 1 qui commande le commutateur 6. Le commutateur 6 a sa première borne reliée à la sortie de signal de rampe modulée du générateur de champ 3 ; en réalité cette liaison se fait à travers le commutateur 5 selon la figure 3 mais, comme ce commutateur est en permanence en position basse lorsque le poste répond à une interrogation, il a été remplacé par un court-circuit.

La deuxième borne du commutateur 6 est reliée, via un circuit détecteur d'en-tête 11, suivi d'un circuit d'analyse d'adresse 12, à une première entrée d'un circuit de calcul de synchronisation 14, et au calculateur 1. La deuxième borne du commutateur 6 est également reliée à la première entrée du mélangeur 7 dont la deuxième entrée est connectée à la sortie de signal de rampe pure du générateur de champ 3 ; le mélangeur a sa sortie reliée directement à une deuxième entrée du circuit 14 et, à travers un circuit de détection de mode de synchronisation 13, à une troisième entrée du circuit de calcul de synchronisation 14 ; la sortie du circuit 14 est reliée à une entrée de synchronisation du générateur de rampe 3.

Le point milieu du commutateur 6 est relié à l'antenne 8.

Quand un poste reçoit un paquet, quel qu'il soit, son circuit 11 détecte l'en-tête du paquet et le circuit 12 analyse cet en-tête afin d'en fournir le contenu au calculateur 1 et au générateur de champ si l'en-tête contient l'adresse du poste.

Les signaux fournis par le circuit 12 permettent d'effectuer une synchronisation grossière du générateur de champ 3 sur la fréquence porteuse du champ du paquet reçu ; ceci est possible du fait que tous les paquets sont construits selon un format constant et qu'en particulier l'adresse des destinataires, dans l'en-tête, est séparée du début du champ par une durée fixe, la même pour tous les paquets. Le générateur de champ peut donc commencer à se synchroniser sur l'en-tête du paquet reçu et son signal de rampe pure est envoyé vers le mélangeur 7 où il est mélangé avec le signal reçu par l'antenne 8.

Le signal de sortie du mélangeur permet au circuit 13 de détection de mode de synchronisation la démodulation des informations contenues dans le champ d'informations, quand il y en a, et notamment la restitution de l'information de mode de synchronisation donnant le type de traitement pour trouver la synchronisation fine ; avec les signaux qu'il reçoit du circuits 12 le circuit 14 élabore tout d'abord une synchronisation sur en-tête permettant d'initialiser le calage du générateur de champ 3 ; avec les signaux qu'il reçoit des circuits 7 et 13 le circuit 14 effectue un calcul de synchronisation fine permettant de réduire la valeur de l'imprécision de la synchronisation du poste questionné par rapport au champ d'informations du poste interrogateur et donc de corriger le calage du générateur de champ 3. Il est à noter que les opérations de synchronisation précise sur le champ d'informations du paquet d'interrogation sont superflues pour une simple recherche de direction mais que le poste n'étant, bien entendu, pas fait uniquement pour traiter des paquets d'interrogation concernant la direction, il met systématiquement en oeuvre ces opérations.

Le calculateur commande le basculement de position basse en position haute du commutateur 6, s'il a reçu par le circuit 12 l'adresse du poste dont il fait partie ; et cette commande de basculement est envoyée par le calculateur avec un retard correspondant à l'intervalle de temps qui sépare l'adresse dans l'en-tête B de la fin du champ C. A partir de ce basculement le poste interrogé émet un signal de réponse comme décrit à l'aide de la figure 1b, et cela grâce au générateur de champ 3 qui reçoit, du calculateur 1, l'information à transmettre.

La remarque qui suit concerne les modes de synchronisation dont il a été question plus avant. A partir de l'en-tête, le poste interrogé va trouver un certain nombre de pics de corrélation correspondant aux différents chemins ou multi-trajets impliqués dans la communication entre le poste interrogateur et lui-même. L'un des modes de synchronisation consiste à prendre le pic le plus énergétique. Dans ce cas, le poste interrogateur indique au poste interrogé, grâce à des informations transmises dans la première partie du champ, que ce mode de synchronisation est celui à pendre en compte. Un second mode de synchronisation consiste à prendre la moyenne barycentrique des échos reçus par le poste interrogé. Dans ce cas aussi, le poste interrogateur indique au poste interrogé que ce traitement est celui à appliquer. Il existe d'autres modes de synchronisation et de manière générale c'est le poste interrogateur qui stipule au poste interrogé le mode de synchronisation à adopter. Le poste interrogateur utilise en conséquence un algorithme de traitement sur le signal de battement, identique à celui utilisé dans le poste interrogé.

Au sujet des en-têtes il est à remarquer que, lorsqu'ils sont courts, le poste interrogateur peut être amené à donner l'adresse du ou des postes interrogés non pas dans l'en-tête B mais dans la toute première partie du champ d'informations C. Dans ce cas, tous les postes qui ont réussi à se synchroniser grossièrement, démodulent la première partie du champ et seuls les postes dont l'adresse est contenue dans ce champ élaboreront un signal de réponse.

La durée du champ C selon la figure 1a peut être définie au mieux en fonction de l'application. En particulier elle peut être fixée à 0. Dans ce cas spécifique, l'adresse du poste interrogé est, bien entendu, transmise obligatoirement dans l'en-tête.

Il est à noter que, pour la simplification des explications, il a été indiqué que l'antenne 8 selon les figures 3 et 4 était omnidirectionnelle. En fait il s'agit, dans l'exemple décrit, d'une antenne dont les caractéristiques peuvent être modifiées sous la commande du calculateur 1, pour qu'elle présente soit un diagramme de rayonnement omnidirectionnel, soit un diagramme de rayonnement dont l'ouverture peut prendre différentes valeurs et l'axe différentes directions ; et qui mieux est, il s'agit de l'antenne constituée par l'association du commutateur 9 et des antennes sectorielles A1 à A6, les commutateurs 6 et 9 ne formant qu'un. Avec une telle antenne si la direction d'un poste interrogée est connue avec une précision de, par exemple ± 60 degrés, il est possible d'émettre le signal d'interrogation avec, pour l'antenne 8, non pas un angle ouverture de 360 degrés mais seulement de 60 degrés ; de même après qu'un poste ait repéré la direction d'un autre poste du réseau dont il désire recevoir des informations ou vers lequel il désire envoyer des informations et en particulier un signal de réponse, il lui est possible de choisir au mieux le diagramme d'émission de son antenne 8 en fonction de cette position.

L'invention n'est pas limitée à l'exemple décrit et peut être appliquée à tous types d'émetteurs-récepteurs sous deux réserves: d'une part pouvoir émettre un signal sur une antenne omnidirectionnelle ou du moins à diagramme de rayonnement large couvrant la zone ou le poste concerné par le signal est censé se trouver, d'autre part pouvoir, dans le poste interrogateur, recevoir sur un ensemble d'antennes à diagramme de rayonnement étroit, commutées séquentiellement et pointées selon différents azimuts.

## Revendications

1. Procédé de détermination de la direction d'un émetteur-récepteur dans un réseau de radiocommunication, **caractérisé en ce qu'**il consiste, quand un premier poste du réseau veut déclencher une recherche de la direction dans laquelle se situe un deuxième poste du réseau,
- à émettre, à partir du premier poste émetteur-récepteur, un signal d'interrogation comportant une rampe de fréquence sur une première antenne à diagramme de rayonnement large (8)
- à reconnaître, dans le deuxième poste émetteur-récepteur, le signal d'interrogation et,
- quand un tel signal est reconnu, à émettre, à partir dudit deuxième poste, un signal de réponse obtenu en modulant la rampe dudit signal d'Interrogation à l'aide d'une antenne à diagramme de rayonnement large (8)
- à passer en réception dans le premier poste, après avoir émis ledit signal d'interrogation, la réception étant réalisée à l'aide d'un ensemble d'antennes (10, A1-A6) à diagramme de rayonnement étroit, commutées séquentiellement et pointées selon différents azimuts et,
- à analyser, lorsqu'un signal de réponse est reçu par au moins une antenne de l'ensemble d'antennes (10, A1-A6), les amplitudes du signal de réponse reçu dans les antennes de l'ensemble afin d'en déduire la direction du poste ayant émis le signal de réponse reçu.

2. Procédé selon la revendication 1, **caractérisé en ce que**, le premier et le deuxième poste étant conçus pour échanger des informations sous la forme de paquets comportant un en-tête (B) à une première fréquence porteuse suivi d'un champ d'informations (C) à une seconde fréquence porteuse qui varie selon une rampe linéaire d'une première à une seconde valeur de fréquence donnée, il consiste à émettre, comme signal d'interrogation, un paquet et à émettre, comme signal de réponse, un signal qui varie selon la même rampe linéaire que celle du paquet d'interrogation.

3. Procédé selon la revendication 2 utilisant, comme ensemble d'antennes, n antennes sectorielles sensiblement identiques, avec n entier supérieur à 1, **caractérisé en ce qu'**il consiste, dans le premier poste, à commuter au moins une fois, successivement chacune des antennes sectorielles pendant un temps t prédéterminé et, dans le deuxième poste, à émettre le signal de réponse au moins au cours d'un cycle de temps n.t, pendant au moins une partie de la durée de chacun des n intervalles de temps de durée t du cycle n.† considéré.

4. Procédé selon la revendication 2, **caractérisé en ce que** la première et la seconde valeur de fréquence donnée sont confondues.

5. Procédé selon la revendication 2, **caractérisé en ce qu'**il consiste à inscrire dans le paquet d'interrogation l'adresse du deuxième poste.

6. Poste émetteur-récepteur **caractérisé en ce qu'**il constitue l'un des deux postes dits respectivement premier et deuxième poste selon l'une des revendications 1 à 5, et **en ce que**, pour cela, il est comprend des moyens pour réaliser toutes les étapes des revendications 1 à 5 et pour l'émission-réception de paquets de données comportant un en-tête (B) à une fréquence porteuse fixe, suivi d'un champ d'informations (C) à une fréquence porteuse qui varie selon une rampe linéaire.

## Claims

1. Method for determining the direction of a transmitter/receiver in a radio-communication network, **characterized in that** it consists, when a first station of the network wishes to trigger a search for the direction in which a second station of the network lies,
- in transmitting, from the first transmitter/ receiver station, an interrogation signal comprising a frequency ramp on a first antenna with wide radiation pattern (8)
- in recognizing, in the second transmitter/ receiver station, the interrogation signal and,
- when such a signal is recognized, in transmitting, from the said second station, a response signal obtained by modulating the ramp of the said interrogation signal with the aid of an antenna with wide radiation pattern (8)
- in switching to reception in the first station, after having transmitted the said interrogation signal, reception being carried out with the aid of an assembly of antennas (10, A1-A6) with narrow radiation pattern, which are switched sequentially and pointed along different azimuths and,
- in analysing, when a response signal is received by at least one antenna of the assembly of antennas (10, A1-A6), the amplitudes of the response signal received in the antennas of the assembly so as to deduce therefrom the direction of the station having transmitted the response signal received.

2. Method according to Claim 1, **characterized in that**, the first and the second station being designed to exchange information in the form of packets comprising a header (B) at a first carrier frequency, followed by an information field (C) at a second carrier frequency which varies according to a linear ramp from a first to a second given frequency value, it consists in transmitting, as interrogation signal, a packet and in transmitting, as response signal, a signal which varies according to the same linear ramp as that of the interrogation packet.

3. Method according to Claim 2 using, as assembly of antennas, n substantially identical sector antennas, with n an integer greater than 1, **characterized in that** it consists, within the first station, in switching at least once, successively each of the sector antennas for a predetermined time t and, within the second station, in transmitting the response signal at least in the course of a cycle of time n.t, for at least part of the duration of each of the n time intervals of duration t of the cycle n.t considered.

4. Method according to Claim 2, **characterized in that** the first and the second given frequency value coincide.

5. Method according to Claim 2, **characterized in that** it consists in writing the address of the second station into the interrogation packet.

6. Transmitter/receiver station **characterized in that** it constitutes one of the two stations, respectively the so-called first and second station according to one of Claims 1 to 5, and **in that**, accordingly, it comprises means for carrying out all the steps of Claims 1 to 5 and for the transmission/reception of data packets comprising a header (B) at a fixed carrier frequency, followed by an information field (C) at a carrier frequency which varies according to a linear ramp.

## Patentansprüche

1. Verfahren zum Bestimmen der Richtung eines Sender/Empfängers in einem Funkkommunikationsnetz, **dadurch gekennzeichnet, daß** es dann, wenn eine erste Netzstation eine Suche der Richtung, in der sich eine zweite Netzstation befindet, beginnen möchte, darin besteht,
- ausgehend von der ersten Sender/Empfanger-Station ein Abfragesignal, das eine Frequenzrampe enthält, an einer ersten Antenne mit breitem Strahlungsdiagramm (8) auszusenden,
- in der zweiten Sender/Empfänger-Station das Abfragesignal wiederzugewinnen und dann, wenn ein solches Signal wiedergewonnen wird, ausgehend von der zweiten Station ein Antwortsignal, das durch Modulation der Rampe des Abfragesignals erhalten wird, mit Hilfe einer Antenne mit breitem Strahlungsdiagramm (8) zu senden,
- in der ersten Station zum Empfang überzugehen, nachdem das Abfragesignal gesendet worden ist, wobei der Empfang mit Hilfe einer Gruppe von Antennen (10, A1-A6) mit schmalem Strahlungsdiagramm verwirklicht wird, die sequentiell umgeschaltet und auf verschiedene Azimutwinkel ausgerichtet werden, und
- dann, wenn ein Antwortsignal durch wenigstens eine Antenne der Antennengruppe (10, A1-A6) empfangen wird, die Amplituden des in den Antennen der Gruppe empfangenen Antwortsignals zu analysieren, um daraus die Richtung derjenigen Station abzuleiten, die das empfangene Antwortsignal gesendet hat.

2. Verfahren nach Anspruch 1, **dadurch gekennzeichnet, daß** es dann, wenn die erste und die zweite Station so beschaffen sind, daß sie Informationen in Form von Paketen austauschen, die einen Kopfteil (B) mit einer ersten Trägerfrequenz, gefolgt von einem Informationsfeld (C) mit einer zweiten Trägerfrequenz, die sich entsprechend einer linearen Rampe von einem ersten zu einem zweiten gegebenen Frequenzwert ändert, umfassen, darin besteht, als Abfragesignal ein Paket zu senden und als Antwortsignal ein Signal zu senden, das sich gemäß derselben linearen Rampe wie jene des Abfragepakets ändert.

3. Verfahren nach Anspruch 2, das als Gruppe von Antennen n Sektorantennen, die im wesentlichen übereinstimmen, wobei n eine ganze Zahl größer als 1 ist, verwendet, **dadurch gekennzeichnet, daß** es in der ersten Station darin besteht, nacheinander jede der Sektorantennen während einer vorgegebenen Zeit t wenigstens einmal umzuschalten und in der zweiten Station das Antwortsignal wenigstens im Verlauf eines Zyklus der Dauer n·t wenigstens während eines Teils der Dauer jedes der n Zeitintervalle mit Dauer t des betrachteten Zyklus n · t zu senden.

4. Verfahren nach Anspruch 2, **dadurch gekennzeichnet, daß** der erste und der zweite gegebene Frequenzwert zusammenfallen.

5. Verfahren nach Anspruch 2, **dadurch gekennzeichnet, daß** es darin besteht, in das Abfragepaket die Adresse der zweiten Station zu schreiben.

6. Sender/Empfänger-Station, **dadurch gekennzeichnet, daß** sie eine der beiden Stationen, die erste bzw. zweite Station genannt werden, nach einem der Ansprüche 1 bis 5 bildet und daß sie hierzu Mittel umfaßt, um sämtliche Schritte der Ansprüche 1 bis 5 auszuführen und um Datenpakete, die einen Kopfteil (B) mit fester Trägerfrequenz, gefolgt von einem Informationsfeld (C) mit einer Trägerfrequenz, die sich entsprechend einer linearen Rampe ändert, umfassen, zu senden bzw. zu empfangen.
